(19) Europäisches Patentamt
European Patent Office
Office européen des brevets

(11) **EP 3 553 109 A1**

(12) **EUROPEAN PATENT APPLICATION**
published in accordance with Art. 153(4) EPC

(43) Date of publication:
**16.10.2019 Bulletin 2019/42**

(51) Int Cl.:
***C08G 63/183*** (2006.01)   ***C08G 63/185*** (2006.01)
***C08G 63/78*** (2006.01)

(21) Application number: **17878750.3**

(22) Date of filing: **30.11.2017**

(86) International application number:
**PCT/CN2017/113754**

(87) International publication number:
**WO 2018/103575 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.12.2016   CN 201611112719**

(71) Applicants:
• **Kingfa Sci. & Tech. Co., Ltd.**
**Guangzhou, Guangdong 510663 (CN)**
• **Zhuhai Wango Chemical Co., Ltd.**
**Zhuhai, Guangdong 519050 (CN)**

(72) Inventors:
• **WANG, Weiwei**
**Guangzhou**
**Guangdong 510663 (CN)**
• **YUAN, Zhimin**
**Guangzhou**
**Guangdong 510663 (CN)**

• **CAI, Tongmin**
**Guangzhou**
**Guangdong 510663 (CN)**
• **HUANG, Xianbo**
**Guangzhou**
**Guangdong 510663 (CN)**
• **ZENG, Xiangbin**
**Guangzhou**
**Guangdong 510663 (CN)**
• **YUAN, Renxu**
**Guangzhou**
**Guangdong 510663 (CN)**
• **GUO, Zhilong**
**Guangzhou**
**Guangdong 510663 (CN)**
• **TANG, Meijun**
**Guangzhou**
**Guangdong 510663 (CN)**

(74) Representative: **Petraz, Gilberto Luigi et al**
**GLP S.r.l.**
**Viale Europa Unita, 171**
**33100 Udine (IT)**

(54) **POLYTEREPHTHALATE-CO-SEBACATE RESIN AND METHOD FOR PREPARING SAME**

(57)   The present invention discloses a poly(terephthalate-co-sebacate) resin and a preparation method thereof, wherein the poly(terephthalate-co-sebacate) resin is formed by polymerization of a diacid and a diol, the diacid consists of 45mol%-55mol% of terephthalic acid and 45mol%-55mol% of sebacic acid, the diol is 1,4-butanediol, and thermal performance parameters of the poly(terephthalate-co-sebacate) resin meet the following relational expression:

$$\text{T crystallization peak width at half height}/(\text{T melting point} - \text{T crystallization temperature}) = 0.05 \text{ to } 0.26;$$

and a film made of the poly(terephthalate-co-sebacate) resin with a thickness of $25 \pm 1 \mu m$ has a static friction coefficient of 0.2-0.3 and a light transmittance of 90% or above, and has balanced light transmittance and static friction coefficient, having a relatively low static friction coefficient whilst maintaining a relatively high light transmittance performance, and the resin can be smoothly processed without adding an antiblocking agent or a compatilizer, so that the obtained poly(terephthalate-co-sebacate) resin has good transparency and processing performance.

**Description**

**TECHNICAL FIELD**

The present invention belongs to the field of macromolecular synthesis, and in particular to a poly(terephthalate-co-sebacate) resin and a preparation method thereof.

**BACKGROUND**

Poly(terephthalate-co-sebacate) resin is a copolymer of butanediol sebacate and butanediol terephthalate, having high toughness and high temperature resistance because of containing a flexible aliphatic chain and a rigid aromatic chain, whilst being prompted to also have a biodegradability because of the presence of an ester bond. It is one of the very active degradable materials with best market applications in the research on biodegradable plastics at present.

However, it is found in practical application that, a crystallization rate of the poly(terephthalate-co-sebacate) resin affects not only a transparency of a film material, but also film processing. If the crystallization rate is very slow, films that were just blown out tend to be self-adhesive when they are about to be wound around a scroll, and they are required to be wound around the scroll in most processes of marketing and transport, thereby going against mass processing; and if the crystallization rate is very high, the transparency of the film material will be reduced to some extent.

In the prior art, an antiblocking agent and a slipping agent are usually added to improve the above problems. For example, in a patent CN 103627151 B, 0.5-1% of slipping agent and 0.5-3% of antiblocking agent are added. A slipping agent is usually one or more of stearates, organic carboxylamides or waxes, wherein the stearates include calcium stearate, magnesium stearate, zinc stearate and barium stearate; the organic carboxylamides include erucyl amide, oleamide, N,N-ethylenedi(stearamide); and the waxes include polyethylene wax, oxidized polyethylene wax and paraffin; and the commonly used antiblocking agent is silicon dioxide, talc powder, calcium carbonate, silicon whisker, magnesium oxide, aluminum hydroxide or magnesium hydroxide. All of the slipping agents and antiblocking agents are non-food additives, and fail to contribute to the development of food packaging film materials.

Differential scanning calorimeter (DSC), as one of the most commonly used instruments for thermal analysis, is used for characterizing a polymer melt crystallization process, and reflects a relationship between molecular chain structure and crystallization. Change of the molecular chain structure directly determines the melting or crystallization behavior in the process of heating or cooling via DSC. The present invention finds by researches that when thermal performance parameters of the poly(terephthalate-co-sebacate) resin meet a specific relational expression, the resin not only shows good product quality, but also has good processing performance because of the specific molecular chain structure and crystalline state.

**SUMMARY OF THE INVENTION**

An object of the present invention is to provide a poly(terephthalate-co-sebacate) resin, the thermal performance parameters of which meet a specific relational expression, and which has a high light transmittance performance and a low static friction coefficient.

The present invention is implemented by the following technical solution:

A poly(terephthalate-co-sebacate) resin, formed by polymerization of a diacid and a diol, wherein by molar percentage, the diacid consists of 45mol%-55mol% of terephthalic acid and 45mol%-55mol% of sebacic acid; the diol is 1,4-butanediol, characterized in that, thermal performance parameters of the poly(terephthalate-co-sebacate) resin meet the following relational expression:

$$\text{T crystallization peak width at half height}/(\text{T melting point} - \text{T crystallization temperature}) = 0.05 \text{ to } 0.26;$$

wherein the T crystallization peak width at half height is a peak width at half height of a crystallization peak on a second cooling curve of a DSC measurement, the T melting point is a peak value of a melting peak on a second heating curve of the DSC measurement, and the T crystallization temperature is a peak value of the crystallization peak on the second cooling curve of the DSC measurement.

T crystallization peak width at half height/(T melting point - T crystallization temperature) actually reflects a crystallization behavior of the poly(terephthalate-co-sebacate) resin. The crystallization behavior and a crystal melting behavior are closely associated with molecular chain structure characteristics. Many factors affect the T crystallization peak width at half height, the T melting point and the T crystallization temperature. For example, due to the influence of many factors, such as different proportions of raw material monomers, a degree of monomer self-polymerization, changes of a molecular weight and a sequence structure of the molecular chain, molecular chain segment being uniform or not, the molecular chain being regular or not, a degree of entanglement or branching of the molecular chain, internal rotation ability of the molecular chain, sports ability of the molecular chain, preparation process and the like, the molecular chain structure of the finally obtained poly(terephthalate-co-sebacate) resin is thus greatly different, thereby resulting in changes of the macroscopic light transmittance and the static friction coefficient.

The present invention finds by researches that when the thermal performance parameters of the poly(terephthalate-co-sebacate) resin meet the following relational expression: when T crystallization peak width at half height/(T melting point - T crystallization temperature) = 0.05 to 0.26, the light transmittance of the resin and the static friction coefficient of the film material can be balanced during film blowing, so that the resin shows relatively high light transmittance and low static friction coefficient, and can be smoothly processed without adding an antiblocking agent or a compatilizer, thereby ensuring that the product not only has high quality, but also has good processing performance. A film material having a very high static friction coefficient tends to be self-adhesive; and a product having a very low static friction coefficient is very slippy, and is not suitable for processing or winding. When T crystallization peak width at half height/(T melting point - T crystallization temperature) is lower than 0.05, the crystallization rate is very fast due to the change of molecular chain structure, thereby resulting in a relatively low light transmittance, and affecting the product quality; and when T crystallization peak width at half height/(T melting point - T crystallization temperature) is higher than 0.26, the crystallization rate is very slow due to the change of molecular chain structure, thereby resulting in a relatively high static friction coefficient, and failing to contribute to smooth processing. Preferably, the thermal performance parameters of the poly(terephthalate-co-sebacate) resin according to the present invention meet the following relational expression: T crystallization peak width at half height/(T melting point - T crystallization temperature) = 0.1 to 0.21.

Preferably, a carboxyl group content in the poly(terephthalate-co-sebacate) resin is 30mol/t or less. When the carboxyl group content is increased, water resistance of the polyester resin becomes worse during storage or processing, so that the product quality tends to become worse; and when the carboxyl group content is very low, a process route becomes complex, and the equipment investment is very high, thereby resulting in economic disadvantages.

Preferably, a melt index of the poly(terephthalate-co-sebacate) resin is tested as 3.0g/10min-20.0g/10min at 190°C based on a weight of 2.16kg.

Preferably, a moisture content in the poly(terephthalate-co-sebacate) resin is 50ppm-800ppm based on a total mass of the whole poly(terephthalate-co-sebacate) resin. When the moisture content is very low, the process route becomes very complex, and a drying time is very long; and the low moisture content causes economic disadvantages, and may have negative effects on color and other varieties. On the other hand, when the moisture content is very high, the poly(terephthalate-co-sebacate) resin is hydrolyzed during storage, so that the product quality tends to become worse.

The present invention further provides a preparation method of the poly(terephthalate-co-sebacate) resin, comprising the following steps:

(1) under the protection of high purity nitrogen, adding measured amounts of terephthalic acid, 1,4-butanediol and tetra-(2-ethylhexyl)titanate into a reactor, heating to 240-250°C, reacting under a pressure of 0.15-0.3MPa for 2 hours, then adding sebacic acid, controlling the temperature at 240-250°C, reacting under a vacuum of 10-30 KPa for 1-2 hours; and

(2) reducing the pressure in the reactor to 100Pa or less, reacting at 230-260°C for 2-4 hours, stopping stirring, filling high purity nitrogen in the reactor, extruding a resulting resin from the reactor for granulation, and then obtaining the desired resin.

Compared with the prior art, the present invention has the following beneficial effects:

The present invention finds by researches that the thermal performance parameters of the poly(terephthalate-co-sebacate) resin according to the present invention meet the following relational expression: T crystallization peak width at half height/(T melting point - T crystallization temperature) = 0.05 to 0.26. Because the crystallization rate of the resin is effectively controlled, a film made of the poly(terephthalate-co-sebacate) resin with a thickness of $25 \pm 1 \mu m$ has a static friction coefficient of 0.2-0.3 and a light transmittance of 90% or above, and has balanced light transmittance and static friction coefficient, having a relatively low static friction coefficient whilst maintaining a relatively high light transmittance performance, and the resin can be smoothly processed without adding an antiblocking agent or a compatilizer, so that the obtained poly(terephthalate-co-sebacate) resin shows good transparency and processing performance.

## DETAILED DESCRIPTION OF THE PREFERRED EMBODIMENT

The present invention is further illustrated below in conjunction with specific embodiments, and the following examples are preferred embodiments of the invention. However, the embodiments of the present invention are not limited to the following examples.

**Synthesis of a poly(terephthalate-co-sebacate) resin (PBSeT):**

Under the protection of high purity nitrogen, measured terephthalic acid, 1,4-butanediol and tetra-(2-ethylhexyl)titanate were added into a reactor and heated to 240-250°C, and a reaction was kept under a pressure of 0.15-0.3 MPa for 2 hours, and then sebacic acid was added thereto. The reactor was controlled at a temperature of 240-250°C, and the reaction was kept under a vacuum of 10-30 KPa for 1-2 hours; the pressure in the reactor was reduced to 100Pa or less, and the reaction was kept at 230-260°C for 2-4 hours. After stopping stirring, high purity nitrogen was filled in the reactor, a resulting resin was extruded from the reactor for granulation, and then the poly(terephthalate-co-sebacate) resin was obtained. The performance results are shown in Table 1.

Example 1: The mass of sebacic acid is 2616.5g, the mass of 1,4-butanediol is 3395.8g, the mass of terephthalic acid is 2024.0g, and the mass of tetra-(2-ethylhexyl)titanate is 6.0g.
Example 2: The mass of sebacic acid is 2625.9g, the mass of 1,4-butanediol is 3394.7g, the mass of terephthalic acid is 2015.1g, and the mass of tetra-(2-ethylhexyl)titanate is 6.0g.
Example 3: The mass of sebacic acid is 2639.9g, the mass of 1,4-butanediol is 3393.2g, the mass of terephthalic acid is 2001.6g, and the mass of tetra-(2-ethylhexyl)titanate is 6.0g.
Example 4: The mass of sebacic acid is 2611.8g, the mass of 1,4-butanediol is 3396.3g, the mass of terephthalic acid is 2028.5g, and the mass of tetra-(2-ethylhexyl)titanate is 6.0g.
Example 5: The mass of sebacic acid is 2779.6g, the mass of 1,4-butanediol is 3377.9g, the mass of terephthalic acid is 1868.1g, and the mass of tetra-(2-ethylhexyl)titanate is 6.0g.
Example 6: The mass of sebacic acid is 2309.0g, the mass of 1,4-butanediol is 3429.5g, the mass of terephthalic acid is 2318.1g, and the mass of tetra-(2-ethylhexyl)titanate is 6.0g.
Example 7: The mass of sebacic acid is 2607.1g, the mass of 1,4-butanediol is 3396.8g, the mass of terephthalic acid is 2033.0g, and the mass of tetra-(2-ethylhexyl)titanate is 6.0g.
Example 8: The mass of sebacic acid is 2602.4g, the mass of 1,4-butanediol is 3397.3g, the mass of terephthalic acid is 2037.4g, and the mass of tetra-(2-ethylhexyl)titanate is 6.0g.
Example 9: The mass of sebacic acid is 2356.7g, the mass of 1,4-butanediol is 3424.3g, the mass of terephthalic acid is 2272.5g, and the mass of tetra-(2-ethylhexyl)titanate is 6.0g.
Example 10: The mass of sebacic acid is 2361.4g, the mass of 1,4-butanediol is 3423.7g, the mass of terephthalic acid is 2267.9g, and the mass of tetra-(2-ethylhexyl)titanate is 6.0g.

Comparative Example 1: Under the protection of high purity nitrogen, measured sebacic acid, terephthalic acid and 1,4-butanediol was added into a reactor, and tetra-(2-ethylhexyl)titanate was added. The reactor was heated to 200-230°C for a reaction for 1-3 hours, and was vacuumized to reduce a pressure in the reactor to 100Pa or less in 2 hours, and the reaction was kept at 230-260°C for 2-4 hours. After stopping stirring, high purity nitrogen was filled in the reactor, a resulting resin was extruded from the reactor for granulation, and then the desired resin was obtained.
Particularly, the mass of sebacic acid is 2616.5g, the mass of 1,4-butanediol is 3395.8g, the mass of terephthalic acid is 2024.0g, and the mass of tetra-(2-ethylhexyl)titanate is 6.0g.
Comparative Example 2: The mass of sebacic acid is 2356.7g, the mass of 1,4-butanediol is 3424.3g, the mass of terephthalic acid is 2272.5g, and the mass of tetra-(2-ethylhexyl)titanate is 6.0g.
The preparation process is identical to that in Comparative Example 1.
Comparative Example 3: The mass of sebacic acid is 2756.4g, the mass of 1,4-butanediol is 3380.4g, the mass of terephthalic acid is 1890.2g, and the mass of tetra-(2-ethylhexyl)titanate is 6.0g. The preparation process is identical to that in Example 1.

**Performance Evaluation Methods:**

Determination method of carboxyl group content: according to a method A in GB/T 14190-2008.
Determination method of moisture content: according to a method B in GB/T 12006.2-2009.
Determination method of melt index: testing at 190°C based on a weight of 2.16 kg.
DSC measurement: using Germany NETZSCH 204 F1 as instrument, with a scanning temperature of 0-200°C at a heating/cooling rate of 10°C/min in two cycles of heating and cooling, and using a melting point and a crystallization temperature on a second cyclic curve.
Determination method of transmittance: the synthesized resin was made into a film with a thickness of 25±1μm, which is tested via a WGT-S transmittance/haze tester of Shanghai Shenguang Instrument Co., Ltd according to a method in GB/T2410-2008.

Determination method of static friction coefficient: the synthesized resin is made into a film with a thickness of $25\pm1\mu m$, which is tested according to a method in GB 10006-88.

Table 1

| | Terephthalic acid (mol%) | Carboxyl group content: mol/T | Moisture content ppm | Melt index (g/ 10min) | T melting point (°C) | T crystallization temperature (°C) | T crystallization peak width at half height | T crystallization peak width at half height/(T melting point -T crystallization temperature) | Light transmittance (%) | Static friction coefficient |
|---|---|---|---|---|---|---|---|---|---|---|
| Example 1 | 48.5% | 15.3 | 52 | 3.3 | 117 | 35.6 | 5.7 | 0.07 | 90.80% | 0.23 |
| Example 2 | 48.3% | 16.5 | 120 | 3.7 | 116.5 | 34.8 | 4.9 | 0.06 | 91.10% | 0.22 |
| Example 3 | 48.0% | 17.4 | 210 | 5.6 | 115.0 | 33.5 | 4.1 | 0.05 | 91.00% | 0.23 |
| Example 4 | 48.6% | 19.8 | 330 | 8.4 | 117.3 | 35.8 | 20.4 | 0.25 | 93.00% | 0.29 |
| Example 5 | 45.0% | 20.3 | 420 | 4.7 | 104 | 29.8 | 3.8 | 0.051 | 90.50% | 0.21 |
| Example 6 | 55.0% | 22.1 | 550 | 10.5 | 135 | 88 | 12.2 | 0.26 | 92.70% | 0.28 |
| Example 7 | 48.7% | 22.5 | 650 | 12.3 | 118.1 | 36.7 | 8.1 | 0.1 | 92.10% | 0.25 |
| Example 8 | 48.8% | 29.6 | 710 | 9.8 | 118.5 | 37.1 | 12.3 | 0.15 | 92.50% | 0.26 |
| Example 9 | 54.0% | 23.7 | 780 | 7.6 | 134 | 87.3 | 7 | 0.15 | 92.00% | 0.24 |
| Example 10 | 53.9% | 28.9 | 230 | 19.2 | 133.5 | 85.7 | 10 | 0.21 | 92.20% | 0.25 |
| Comparison Example 1 | 48.5% | 19.7 | 250 | 13.0 | 117 | 35.6 | 22 | 0.27 | 93.20% | 0.32 |
| Comparison Example 2 | 54.0% | 26.8 | 460 | 6.7 | 134 | 86.2 | 13.4 | 0.28 | 93.10% | 0.31 |
| Comparison Example 3 | 45.5% | 24.9 | 570 | 3.2 | 106 | 30.4 | 3.5 | 0.046 | 88.6% | 0.25 |

EP 3 553 109 A1

As can be seen from the results in Table 1, when the thermal performance parameters of the poly(terephthalate-co-sebacate) resin meet the following relational expression: T crystallization peak width at half height/(T melting point - T crystallization temperature) = 0.05 to 0.26, because a crystallization rate of the resin is effectively controlled, a film made of the poly(terephthalate-co-sebacate) resin with a thickness of $25 \pm 1 \mu m$ has a static friction coefficient of 0.2-0.3 and a light transmittance of 90% or above, has balanced light transmittance and static friction coefficient, and shows good transparency and processing performance. In Comparative Examples 1-2, when the T crystallization peak width at half height/(T melting point - T crystallization temperature) is higher than 0.26, the film material shows a relatively high light transmittance, but has a high static friction coefficient, going against smooth processing; and in Comparative Example 3, when the T crystallization peak width at half height/(T melting point - T crystallization temperature) is lower than 0.05, the film material shows a relatively low static friction coefficient, but has poor transparency.

**Claims**

1. A poly(terephthalate-co-sebacate) resin, formed by polymerization of a diacid and a diol, wherein by molar percentage, the diacid consists of 45mol%-55mol% of terephthalic acid and 45mol%-55mol% of sebacic acid; the diol is 1,4-butanediol, **characterized in that**, thermal performance parameters of the poly(terephthalate-co-sebacate) resin meet the following relational expression:

$$\text{T crystallization peak width at half height}/(\text{T melting point - T crystallization temperature}) = 0.05 \text{ to } 0.26;$$

wherein the T crystallization peak width at half height is a peak width at half height of a crystallization peak on a second cooling curve of a DSC measurement, the T melting point is a peak value of a melting peak on a second heating curve of the DSC measurement, and the T crystallization temperature is a peak value of the crystallization peak on the second cooling curve of the DSC measurement.

2. The poly(terephthalate-co-sebacate) resin according to claim 1, wherein a method of the DSC measurement is using Germany NETZSCH 204 F1 as instrument, with a scanning temperature of 0-200°C at a heating/cooling rate of 10°C/min in two cycles of heating and cooling, and using a melting point and a crystallization temperature on a second cyclic curve.

3. The poly(terephthalate-co-sebacate) resin according to claim 1, wherein the thermal performance parameters of the poly(terephthalate-co-sebacate) resin meet the following relational expression:

$$\text{T crystallization peak width at half height}/(\text{T melting point - T crystallization temperature}) = 0.1 \text{ to } 0.21;$$

wherein the T crystallization peak width at half height is the peak width at half height of the crystallization peak on the second cooling curve of the DSC measurement, the T melting point is the peak value of the melting peak on the second heating curve of the DSC measurement, and the T crystallization temperature is the peak value of the crystallization peak on the second cooling curve of the DSC measurement.

4. The poly(terephthalate-co-sebacate) resin according to claim 1, wherein a carboxyl group content in the poly(terephthalate-co-sebacate) resin is 30mol/t or less, and a testing method of the carboxyl group content is carried out according to a method A in GB/T14190-2008.

5. The poly(terephthalate-co-sebacate) resin according to claim 1, wherein a melt index of the poly(terephthalate-co-sebacate) resin is tested as 3.0g/10min-20.0g/10min at 190°C based on a weight of 2.16kg.

6. The poly(terephthalate-co-sebacate) resin according to claim 1, wherein a moisture content in the poly(terephthalate-co-sebacate) resin is 50ppm-800ppm based on a total mass of the whole poly(terephthalate-co-sebacate) resin, and a testing method of the moisture content is carried out according to a method B in GB/T12006.2-2009.

7. A preparation method of the poly(terephthalate-co-sebacate) resin according to any one of claims 1-5, comprising the following steps:

(1) under the protection of high purity nitrogen, adding measured amounts of terephthalic acid, 1,4-butanediol and tetra-(2-ethylhexyl)titanate into a reactor, heating to 240-250°C, reacting under a pressure of 0.15-0.3MPa for 2 hours, then adding sebacic acid, controlling the temperature at 240-250°C, reacting under a vacuum of 10-30 KPa for 1-2 hours; and
(2) reducing the pressure in the reactor to 100Pa or less, reacting at 230-260°C for 2-4 hours, stopping stirring, filling high purity nitrogen in the reactor, extruding a resulting resin from the reactor for granulation, and then obtaining the desired resin.

# INTERNATIONAL SEARCH REPORT

| International application No. |
| --- |
| PCT/CN2017/113754 |

## A. CLASSIFICATION OF SUBJECT MATTER

C08G 63/183 (2006.01) i; C08G 63/185 (2006.01) i; C08G 63/78 (2006.01) i

According to International Patent Classification (IPC) or to both national classification and IPC

## B. FIELDS SEARCHED

Minimum documentation searched (classification system followed by classification symbols)

C08G 63/-

Documentation searched other than minimum documentation to the extent that such documents are included in the fields searched

Electronic data base consulted during the international search (name of data base and, where practicable, search terms used)

cnki, cnpat, cntxt, ven: 金发科技股份有限公司 or 珠海万通化工有限公司, 王伟伟 or 袁志敏 or 蔡彤旻 or 黄险波 or 曾祥斌 or 苑仁旭 or 郭志龙 or 唐美军, 对苯二甲酸 or 对苯二酸 or 对酞酸, 癸二酸, 丁二醇, terephthalic w acid?, (sebacic w acid?) or (decanedioic w acid?), butanediol

## C. DOCUMENTS CONSIDERED TO BE RELEVANT

| Category* | Citation of document, with indication, where appropriate, of the relevant passages | Relevant to claim No. |
| --- | --- | --- |
| X | CN 101142256 A (NOVAMONT S.P.A.), 12 March 2008 (12.03.2008), see embodiment 1 | 1-7 |
| A | CN 102443149 A (KINGFA SCIENTIFIC AND TECHNOLOGICAL CO., LTD.; SHANGHAI KINGFATECHNOLOGY DEVELOPMENT CO., LTD.; ZHUHAI WANGO CHEMICAL CO., LTD.), 09 May 2012 (09.05.2012), see entire document | 1-7 |
| A | CN 104558549 A (CHINA PETROLEUM AND CHEMICAL CORPORATION; SINOPEC SHANGHAI PETROCHEMICAL COMPANY LIMITED), 29 April 2015 (29.04.2015), see entire document | 1-7 |
| A | JP 07216107 A (TOYO BOSEKI), 15 August 1995 (15.08.1995), see entire document | 1-7 |

☐ Further documents are listed in the continuation of Box C.     ☒ See patent family annex.

| | |
| --- | --- |
| *    Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&"   document member of the same patent family |
| Date of the actual completion of the international search<br><br>09 February 2018 | Date of mailing of the international search report<br><br>27 February 2018 |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>HUO, Yanli<br><br>Telephone No. (86-10) 62084553 |

Form PCT/ISA/210 (second sheet) (July 2009)

## INTERNATIONAL SEARCH REPORT
### Information on patent family members

| International application No. |
| --- |
| PCT/CN2017/113754 |

| Patent Documents referred in the Report | Publication Date | Patent Family | Publication Date |
| --- | --- | --- | --- |
| CN 101142256 A | 12 March 2008 | ES 2310913 T3 | 16 January 2009 |
| | | DE 602006001856 D1 | 28 August 2008 |
| | | EP 1858951 A1 | 28 November 2007 |
| | | AU 2006224682 A1 | 21 September 2006 |
| | | WO 2006097355 A8 | 26 April 2007 |
| | | CA 2601522 C | 23 July 2013 |
| | | US 8193299 B2 | 05 June 2012 |
| | | CA 2601183 A1 | 21 September 2006 |
| | | CA 2601519 C | 23 July 2013 |
| | | US 8476378 B2 | 02 July 2013 |
| | | ES 2342192 T5 | 11 October 2017 |
| | | CN 103087299 B | 01 April 2015 |
| | | US 2008188593 A1 | 07 August 2008 |
| | | US 8193300 B2 | 05 June 2012 |
| | | JP 5011274 B2 | 29 August 2012 |
| | | DE 602006003078 D1 | 20 November 2008 |
| | | AT 401374 T | 15 August 2008 |
| | | EP 1863860 B1 | 08 October 2008 |
| | | US 2012219740 A1 | 30 August 2012 |
| | | EP 2163567 A3 | 28 April 2010 |
| | | WO 2006097353 A1 | 21 September 2006 |
| | | KR 101216846 B1 | 31 December 2012 |
| | | US 2009005472 A1 | 01 January 2009 |
| | | CN 101142256 B | 21 December 2011 |
| | | JP 2008533256 A | 21 August 2008 |
| | | US 8193301 B2 | 05 June 2012 |
| | | HK 1118845 A1 | 14 September 2012 |
| | | EP 1863861 B1 | 11 May 2011 |
| | | EP 1858978 A1 | 28 November 2007 |
| | | CN 103087299 A | 08 May 2013 |
| | | EP 2163567 A2 | 17 March 2010 |
| | | EP 1858951 B2 | 14 June 2017 |
| | | US 2008194770 A1 | 14 August 2008 |
| | | US 2008214702 A1 | 04 September 2008 |
| | | WO 2006097354 A1 | 21 September 2006 |
| | | ES 2316056 T3 | 01 April 2009 |
| | | CN 101142276 A | 12 March 2008 |
| | | HK 1118846 A1 | 19 October 2012 |
| | | EP 1858951 B1 | 31 March 2010 |
| | | WO 2006097355 A1 | 21 September 2006 |
| | | DE 602006013287 D1 | 12 May 2010 |
| | | HK 1118850 A1 | 08 March 2013 |
| | | AT 509057 T | 15 May 2011 |
| | | CN 101142276 B | 04 July 2012 |
| | | IT MI20050452 A1 | 19 September 2006 |
| | | EP 2287224 A1 | 23 February 2011 |
| | | WO 2006097356 A1 | 21 September 2006 |
| | | CN 101283020 B | 06 March 2013 |
| | | AT 462744 T | 15 April 2010 |
| CN 102443149 A | 09 May 2012 | CN 102443149 B | 10 September 2014 |

Form PCT/ISA/210 (patent family annex) (July 2009)

## INTERNATIONAL SEARCH REPORT
### Information on patent family members

International application No.

PCT/CN2017/113754

| Patent Documents referred in the Report | Publication Date | Patent Family | Publication Date |
|---|---|---|---|
| CN 104558549 A | 29 April 2015 | None | |
| JP 07216107 A | 15 August 1995 | JP 3379189 B2 | 17 February 2003 |
| | | JP H07216107 A | 15 August 1995 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103627151 B